# EUROPÄISCHE PATENTSCHRIFT

(11) **EP 1 009 514 B1**
(45) Veröffentlichungstag und Bekanntmachung des Hinweises auf die Patenterteilung: **13.03.2002**
(21) Anmeldenummer: 98912185.0
(22) Anmeldetag: 14.04.1998
(51) Int. Cl.: B01D 46/04, B01D 46/24

(54) **STAUBFILTER**
DUST FILTER
FILTRE A POUSSIERE

(30) Priorität: 20.08.1997 DE 19736031
(43) Veröffentlichungstag der Anmeldung: 21.06.2000
(73) Patentinhaber: Bühler AG, 9240 Uzwil (CH)
(72) Erfinder: LEHNER, Bernhard, CH-9014 St. Gallen (CH)
(74) Vertreter: Frommhold, Joachim, Dr.
(86) Internationale Anmeldenummer: CH9800139
(87) Internationale Veröffentlichungsnummer: WO9908774

(56) Entgegenhaltungen:
- DE-U- 9 407 798
- FR-A- 2 088 634
- FR-A- 2 397 219
- US-A- 5 328 492

## Beschreibung

Die Erfindung betrifft einen Staubfilter, wie z. B. Schlauchfilter, insbesondere dessen Tank- und Ventilanordnung. Derartige Staubfilter dienen der Reinigung von Förderluft von Staub u. dgl.

Staubfilter sind z. B. Patronen- Kerzenfilter oder auch Schlauchfilter. Am Beispiel der Schlauchfilter sind es Staubabscheider mit schlauchförmigen Filterelementen, z. B. aus Nadelfilz oder behandeltem Gewebe. Die einzelnen Filterschläuche sind in einem gemeinsamen Gehäuse angeordnet und bilden einen Rohgasraum. Die Filterschläuche sind lösbar an entsprechenden Zwischenböden befestigt und bei hängender Anordnung befindet sich oberhalb dieses Zwischenbodens der Reingasraum, der mittels einer Ventilanordnung sowohl mit einem Spülluftkanal als auch mit einem Reingaskanal für den Abzug der gereinigten Luft verbindbar ist. Im unteren Bereich des Gehäuses bzw. Rohgasraumes befindet sich ein Austrag zum Abziehen des ausgefilterten Staubes.

Derartige Schlauchfilter sind z. B. in den DE-A-3939645 oder DE-A-4029994 beschrieben.

Bei einem solchen Schlauchfilter trifft das über die Rohgasleitung in den Rohgasraum einströmende Rohgas auf die Aussenwand eines Filterschlauches, so dass die vom Rohgas mitgeführten Partikel vom Filterschlauch zurückgehalten werden und das gereinigte Gas im Innern des Filterschlauches nach oben steigt, wo es über den Reingasraum letztendlich in eine Reingasleitung abgesaugt wird und erneut zur Verfügung steht. Grössere Partikel fallen im Rohgasraum nach unten und werden im Bodenbereich des Filters ausgetragen, z. B. mittels einer Zellenradschleuse. Feinere Partikel sammeln sich zunächst auf den Aussenflächen der Filterschläuche und sie müssen periodisch abgelöst werden, z. B. durch Spülluft (Druckluft).

Gemäss der DE-A-195 12 289 ist in einer Schlauchfiltervorrichtung mindestens ein Filterschlauch in einem Rohgasraum angeordnet, aus dem gereinigtes Gas abgeführt wird und bei dem die Abreinigung des Filterschlauches durch eine Innenbeaufschlagung mit einem Gasstoss (Jet-Stoss) erfolgt. Hierzu ist weiterhin eine Vorrichtung zum Erzeugen von Druckluftstössen (DE-U-9012518) zur Abreinigung bekannt, die einen, mit Druckiuftanschlüssen ausgestatteten Druckluftbehälter enthält, in dessen Wandung mehrere, jeweils gesonderte Membraneckventile montiert sind, an die quer durch den Drucklufttank geführte, an eine Schlauchfilteranlage ankuppelbare Druckluftrohre angeschlossen sind.

Nach der DE-A-3045759 ist am offenen Ende jedes Schlauchfilters eine Luftdüse angeordnet, die kraft- und formschlüssig gehaltert ist.

Die DE-A-40 29 994 beschreibt eine Filterpatrone zum Entstauben von Gasen, wobei deren Filterkorb am freien Korbende offen ist. Ein Behälter ist oben mit einem Deckel verschlossen und enthält zwischen diesem und einem darunter angeordneten oberen Zwischenboden eine Verteilkammer, die einen Rohgaseinlass aufweist. Der Behälter enthält femer zwischen dem oberen Zwischenboden und einem unteren Zwischenboden eine Sammelkammer, die einen Reingasauslass aufweist. Die Verteilkammer wiederum ist durch ein zentrales Rohr, das sich vom oberen Zwischenboden senkrecht nach unten erstreckt und in ein hohles Kernstück mündet, ständig mit dem untersten Teil des Behälters verbunden. Der obere Zwischenboden ist durch einen Zuganker mit dem zentralen Rohr und über dieses mit dem unteren Zwischenboden axial zusammengespannt. Prozessgas das durch den Gaseinlass in die Verteilkammer und von dort weiter durch das zentrale Rohr nach unten strömt, wird umgelenkt und gelangt über Düsen in den Funktionsraum des Behälters, durchströmt danach die Filterpatronen und gelangt über Öffnungen im unteren Zwischenboden in den Reingasauslass. Das zugeführte Prozessgas dient gleichzeitig als Spülluft der Filterpatronen. Diese Betriebsweise lässt nur geringe Druckdifferenzen und einen Off-line-Betrieb zu.

Die FR-A-2088634 zeigt einen Staubfilter mit einzelnen, am geschlossenen Ende beweglich aufgehangenen Filterelementen. Oberhalb dieser Filterelemente ist ein zentraler Gaseintrittsstutzen für Spülluft mit einem grossen Querschnitt vorgesehen. Dieser Gaseintrittsstutzen wird von einem Tank mit Spülluft beaufschlagt, wobei die Einwirkung der Spülluft auf die Filterelemente nur indirekt und undifferenziert möglich ist.

Eine weitere ähnliche Lösung zeigt auch die DE-U-94 07 798, bei der in einem ähnlichen Tank Spülluft zum Abreinigen von Staubfiltern bereitgestellt wird. Diese Spülluft gelangt über eine Bodenplatte, die mit Durchtrittsöffnungen versehen ist, in die Eintrittsdüsen von Staubfiltern. Der Tank mit der Bodenplatte wird hierbei auf den Filter über Aufsetzfüsse aufgesetzt. Auch bei diesem Stand der Technik ist nur ein Offline-Betrieb möglich, wobei alle Eintrittsdüsen gleichzeitig beaufschlagt werden. Durch das Aufsetzen des Druckluftbehälters mittels Aufsetzfüssen ist eine geschlossene Bauweise nicht gegeben.

Die FR-A-2397219 offenbart ein Gegenspülverfahren für Schlauchfilter zur Staubluftreinigung, sowie einen Filter hierzu. Der Filter weist einen gesonderten Druckraum zur Druckluftversorgung von Spüldüsen im Reingasraum auf, was konstruktiv aufwendig ist.

Der Erfindung liegt nun die Aufgabe zugrunde, die Abreinigung von Staubfiltern mittels Druckluft zu vereinfachen und den konstruktiven Aufwand zur Bereitstellung von Druckluft zu reduzieren. Die Aufgabe wird gemäß dem Kennzeichen des Anspruchs 1 gelöst. Der oberhalb des Reingasraumes befindliche Raum ist somit als Drucklufttank ausgebildet.

Dadurch können die einzelnen Zuführleitungen und Steuerungsarmaturen weitgehend entfallen und im Zwischenboden zwischen Reingas- und Rohgasraum sind nur die, den Filterelementen zugeordneten Luftdüsen, die einzeln ansteuerbar sind, angeordnet. Der Deckel fungiert als Deckel und Drucklufttank in einem.

Durch den Wegfall von Armaturen für Spül- und Steuerluft werden Montage und Unterhalt vereinfacht und es ist nur noch eine allgemeine Druckluftzufuhr erforderlich. Der verfügbare Raum kann optimal genutzt werden, bzw. der erforderliche Raum kann spürbar reduziert werden.

Ein Filtergehäuse enthält wie üblich eine Zuführleitung für staubführendes Rohgas, um das Rohgas in das Filtergehäuse (Rohgasraum) und damit an die Filterelemente zu leiten. Im unteren Bereich des Rohgasraumes, unterhalb der Filterelemente sind

Austragseinrichtungen für die angefallenen Staubpartikel angeordnet. Der Rohgasraum ist durch einen Zwischenboden vom Reingasraum getrennt. Im Zwischenboden sind sowohl die Befestigungen für die Filterkörbe der Filterelemente als auch die Tankboden-Luftdüsen/Ventile zur Abreinigung der Filterelemente angeordnet.

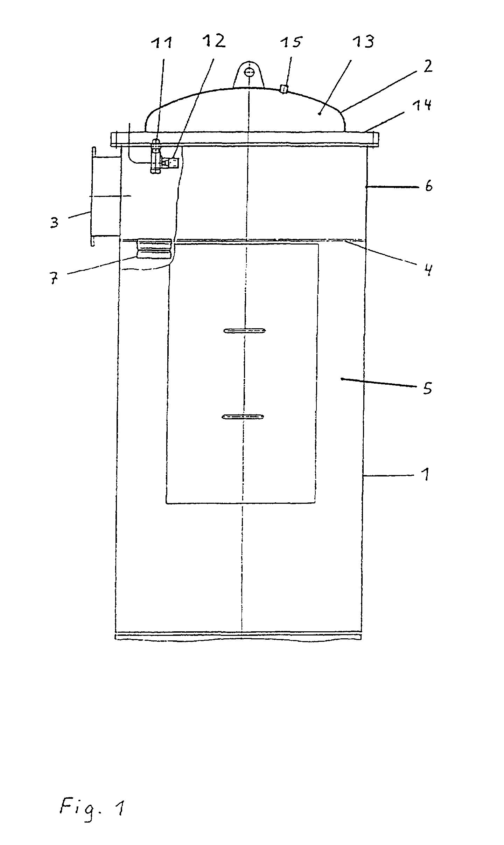

Die Erfindung wird nachfolgend in einem Ausführungsbeispiel eines Schlauchfilters an Hand einer Zeichnung näher beschrieben. In der Zeichnung zeigen die
- Fig. 1:: das Oberteil eines Schlauchfilters, teilweise geschnitten,
- Fig. 2:: den Zwischenboden mit angerissener Filterschlauchanordnung und
- Fig. 3:: eine schematische Schnittdarstellung einer Filterkorbbefestigung.

Ein Schlauchfilter weist ein Gehäuse 1 mit einem Deckel 2, einen nicht dargestellten Staubaustrag sowie Rohgaseinlass und einen Reingasauslass 3 auf. An einem Zwischenboden 4, der den Rohgasraum 5 vom Reingasraum 6 trennt, sind Filterschläuche 7 kraft- und formschlüssig befestigt. Der Filterschlauch 7 ist in einem Filterkorb 8 aufgenommen und die lösbare Befestigung am Zwischenboden 4 erfolgt mittels eines Korbstutzens 9 und nicht explizit dargestellter, bekannter Befestigungsmittel.

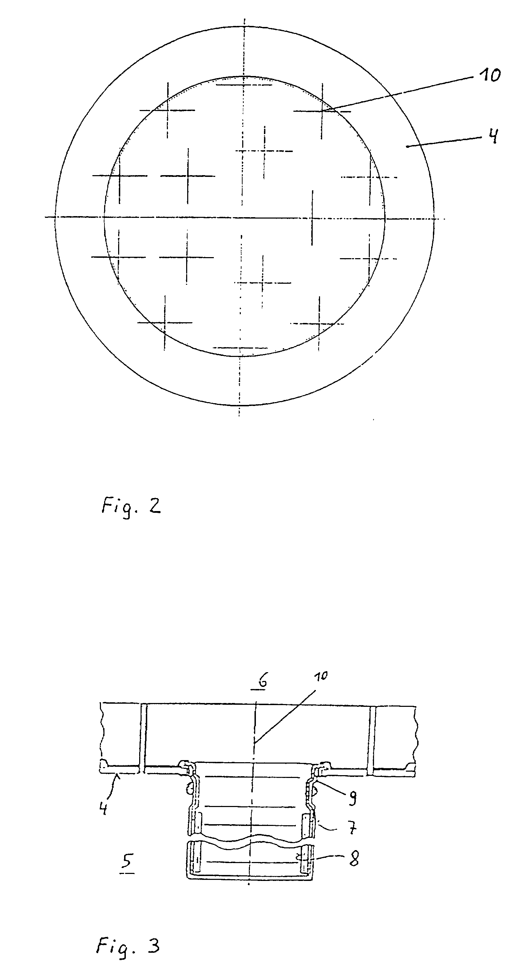

Eine mögliche Variante einer Filteranordnung am Zwischenboden 4 ist in Fig. 2 via angerissene Achsen 10 dargestellt. Die Filterschläuche 7 sind bevorzugt senkrecht hängend eingebaut und werden durch Staubluft (Rohgas) von aussen beaufschlagt und die gereinigte Luft entweicht durch den Filterschlauch 7 in axialer Richtung in den Reingasraum 6 und von dort in den Reingasauslass 3. Zur Reinigung der Filterschläuche 7 wird in definierten Zeitabständen oder nach einem eingestellten Differenzdruck ein kurzer und kräftiger Druckluftstoss durch eine Spülluftdüse 11 in den Filterschlauch 7, entgegen der normalen Strömungsrichtung geblasen. Die Spülluftdüse 11 wird durch ein Magnetventil 12 betätigt und jedem Filterschlauch 7 ist eine Spülluftdüse 11 zugeordnet. Die Magnetventile 12 wiederum sind mit einer, nicht dargestellten elektronischen Steuerung verbunden, die diverse Spülzyklen ermöglicht. Die Spülluftdüsen 11 sind zentrisch zur Achse 10 angeordnet.
Die Bereitstellung der Druckluft erfolgt durch einen gemeinsamen Druckraum 13, der oberhalb des Reingasraumes 6 angeordnet ist und der vom Deckel 2 und einem, den Reingasraum 6 nach oben begrenzenden Boden 14 gebildet ist. Die Bereitstellung der Druckluft selbst erfolgt mittels eines Stutzens 15, der mit einem Ventil versehen ist, in bekannter Weise. Der Druckraum 13 steht ständig unter einem Gebläsedruck von ca. 0,5 bar.

Mit der erfindungsgemässen Anordnung kann die Querschnittsfläche des Filters filtertechnisch optimal aufgeteilt werden. Die Filterschläuche 7 und die Spülluftdüsen 11 können beliebig verteilt sein, so dass die erforderliche Fläche sinkt und damit der Durchmesser des Gehäuses 1, bei vergleichbarer Filterleistung im Vergleich zum Stand der Technik. Umgekehrt kann bei gleichem Querschnitt eine grössere Anzahl an Filterelementen angeordnet sein. Die Anzahl der zu montierenden Teile wird verringert und eine bessere Baugruppenmontage ist gegeben, wobei der Anpassungsaufwand sinkt. Die innenliegenden Spülluftdüsen 11 sind vor Beschädigung geschützt angeordnet. Der Herstellungsaufwand für den Boden 14 sinkt ebenfalls. Da der Deckel 2 sowieso für höhere Drücke ausgelegt sein muss, entsteht gegenüber dem Stand der Technik nur ein geringer Mehraufwand.

Der Deckel 2 ist als Klöpperboden ausgebildet, kann aber ebenfalls halbkugelförmig ausgebildet sein.

Die Erfindung ist nicht auf diese Ausführungsform begrenzt. So sind anstelle der Filterschläuche 7 analog auch Filterkerzen oder Filterpatronen einsetzbar.

### Kurzzeichen

- 1: Gehäuse
- 2: Deckel
- 3: Reingasauslass
- 4: Zwischenboden
- 5: Rohgasraum
- 6: Reingasraum
- 7: Filterschlauch
- 8: Filterkorb
- 9: Korbstutzen
- 10: Achse
- 11: Spülluftdüse
- 12: Magnetventil
- 13: Druckraum
- 14: Boden
- 15: Stutzen

## Patentansprüche

1. Staubfilter zur Staubreinigung von Luft, bestehend aus einem Gehäuse (1) mit einem Deckel (2), Rohgaseinlass und Reingasauslass (3) und Einrichtungen zum Austragen des Staubes sowie im Gehäuse (1) an einem Zwischenboden (4) angeordnetem, mindestens einem, zumeist jedoch mehreren Filterelement(en), über den die gereinigte Luft in einen Reingasraum (6) gelangt, wobei jedem Filterelement eine Spülluftdüse (11) mit einem Steuerorgan zur Abreinigung zugeordnet ist und die Druckluftstösse abgibt, wobei ein gemeinsamer Druckraum (13) der ständig unter Spülluftdruck steht, zur Druckluftversorgung der Spülluftdüse(n) vorgesehen ist und wobei jede Spülluftdüse (11) einen direkten Anschluss zum Druckraum (13) aufweist, **dadurch gekennzeichnet, dass** der gemeinsame Druckraum (13) oberhalb des Reingasraumes (6) angeordnet ist und vom Deckel (2) und einem, den Reingasraum (6) nach oben begrenzenden Boden (14) gebildet ist.

2. Staubfilter nach Anspruch 1, **dadurch gekennzeichnet, dass** einer Spülluftdüse (11) je ein elektrisch gesteuertes Ventil, insbesondere ein Magnetventil (12), oder ein pneumatisch gesteuertes Ventil als Steuerorgan zugeordnet ist.

3. Staubfilter nach Anspruch 1, **dadurch gekennzeichnet, dass** der Deckel (2) als Klöpperboden oder halbkugelförmig ausgebildet ist.

4. Staubfilter nach einem der Ansprüche 1 bis 3, **dadurch gekennzeichnet, dass** die Filterelemente Filterschläuche (7), Filterkerzen oder Filterpatronen sind.

## Claims

1. A dust filter for removing dust from air, consisting of a housing (1) with a cover (2), a crude gas inlet and a clean gas outlet (3) and devices for discharging the dust and at least one filter element, but usually several filter elements arranged on a intermediate plate (4) in the housing (1) so that the purified air can enter a clean gas space (6) with a purging air nozzle (11), with a control element for cleaning being provided for each filter element and delivering surges of compressed air, where a joint pressure space (13) which is constantly under purging air pressure is provided to supply compressed air to the purging air nozzle(s), and each purging air nozzle (11) has a direct connection to the pressure space (13), **characterized in that** the joint pressure space (13) is arranged above the clean gas space (6) and is formed by the cover (2) and a bottom (14) which borders the clean gas space (6) at the upper end.

2. A dust filter according to Claim 1, **characterized in that** an electrically controlled valve, in particular a solenoid valve (12) or a pneumatically controlled valve is provided as the control element for a purging air nozzle (11).

3. A dust filter according to Claim 1, **characterized in that** the cover (2) is designed as a dished boiler end or it may be hemispherical.

4. A dust filter according to one of Claims 1 - 3, **characterized in that** the filter elements are filter tubes (7), filter cores or filter cartridges.

## Revendications

1. Filtre à poussière pour le dépoussiérage d'air, consistant en un boîtier (1) avec un couvercle (2), une entrée d'air brut et une sortie d'air pur (3) et des installations de décharge de la poussière ainsi que, dans le boîtier (1) sur un fond intermédiaire (4) au moins un, mais la plupart du temps plusieurs éléments filtrants, à travers lesquels l'air purifié arrive dans une chambre à gaz pur (6), chaque élément filtrant comportant une buse à air de balayage (11) avec un organe de commande pour le nettoyage et qui émet des jets d'air comprimé, une chambre de pression (13) commune, qui est en permanence sous pression d'air de balayage, étant prévue pour l'alimentation en air comprimé de la (des) buse(s) d'air de balayage et chaque buse d'air de balayage (11) comportant un raccordement direct à la chambre de pression (13), **caractérisé en ce que** la chambre de pression commune (13) est placée au dessus de la chambre à gaz pur (6) et est constituée par le couvercle (2) et un fond (14) délimitant la chambre à gaz brut (6) vers le haut.

2. Filtre à poussière selon la revendication 1,
**caractérisé en ce qu'**à chaque buse d'air de balayage (11) est associée, en tant qu'organe de commande une soupape électrique, en particulier une soupape magnétique (12) ou une soupape à commande pneumatique.

3. Filtre à poussière selon la revendication 1,
**caractérisé en ce que** le couvercle (2) est conçue comme un fond embouti ou en forme de demi-sphère.

4. Filtre à poussière selon une des revendications 1 à 3, **caractérisé en ce que** les éléments filtrants sont des tubes filtrants (7), des bougies ou cartouches filtrantes.
